(19) Europäisches Patentamt

European Patent Office

Office européen des brevets

(11) Veröffentlichungsnummer: **0 363 613**
**A2**

(12) **EUROPÄISCHE PATENTANMELDUNG**

(21) Anmeldenummer: **89115529.3**

(22) Anmeldetag: **23.08.89**

(51) Int. Cl.⁵: **C01B 31/08 , C01B 31/12**

(30) Priorität: **12.10.88 DE 3834745**

(43) Veröffentlichungstag der Anmeldung:
**18.04.90 Patentblatt 90/16**

(84) Benannte Vertragsstaaten:
**AT BE CH DE ES FR GB GR IT LI LU NL SE**

(71) Anmelder: **Degussa Aktiengesellschaft**
**Weissfrauenstrasse 9**
**D-6000 Frankfurt am Main 1(DE)**

(72) Erfinder: **Karl, Alfons, Dr.**
**Herzbergstrasse 53**
**D-6466 Gründau(DE)**

(54) **Verfahren zur Herstellung von Aktivkohle.**

㊹ Verfahren zur Herstellung von Aktivkohle auf Basis von Braunkohle, bei welchem man grubenfeuchte Braunkohle auf höhere Temperaturen, gegebenenfalls unter Zusatz von Kaliumionen, erhitzt.

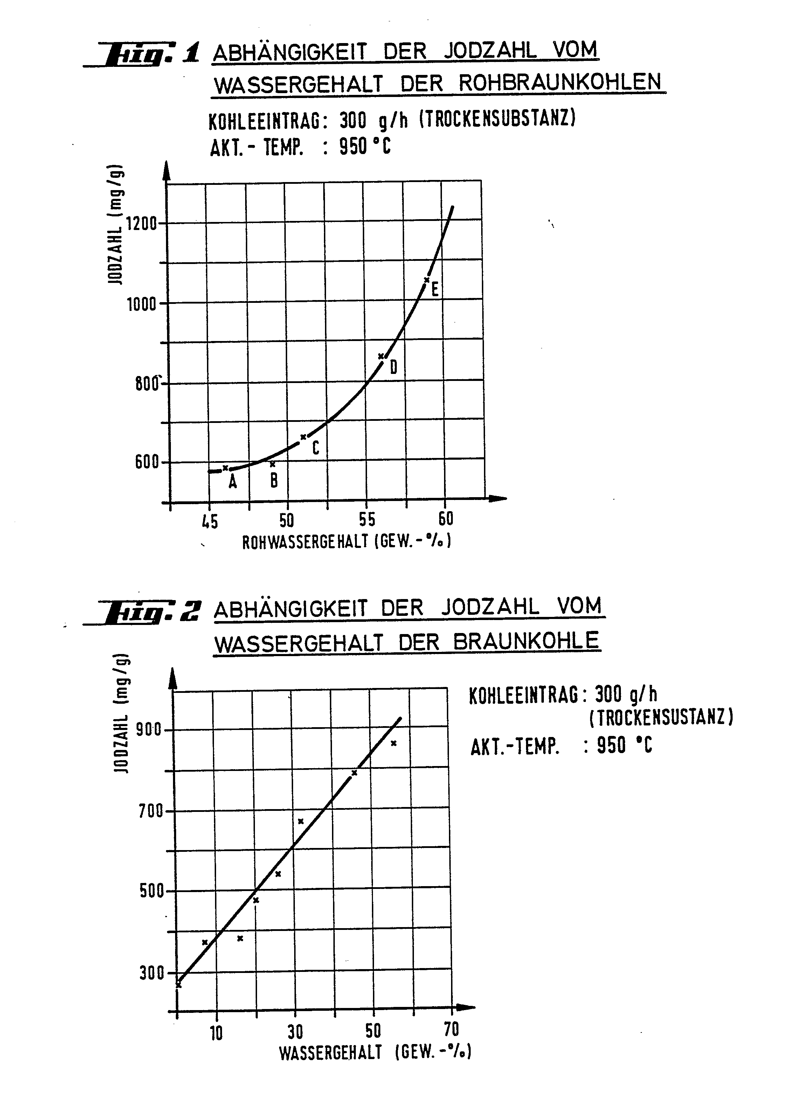

**Fig. 1** ABHÄNGIGKEIT DER JODZAHL VOM WASSERGEHALT DER ROHBRAUNKOHLEN

KOHLEEINTRAG: 300 g/h (TROCKENSUBSTANZ)
AKT.- TEMP. : 950 °C

EP 0 363 613 A2

## Verfahren zur Herstellung von Aktivkohle

Die Erfindung betrifft ein Verfahren zur Herstellung von Aktivkohle auf Basis von Braunkohle.

Es ist bekannt, aus Braunkohle Aktivkohle herzustellen. Derartige bekannte Verfahren werden in den folgenden Dokumenten beschrieben:

D.J. McCarthy, Carbon 15(1977)95-101

Braunkohle wird getrocknet und brikettiert. Die Braunkohlenbriketts werden wieder zerkleinert und mit Wasserdampf im Gegenstrom aktiviert.

R.A. Durie et al., Fuel 58(1979)472-476

Die Braunkohle wird einer Säurewäsche und einem Ionenaustausch unterworfen, an Luft getrocknet, gegebenenfalls granuliert, carbonisiert und mit Wasserdampf aktiviert.

L.J. Harner et al., Proc.-Int. Conf. Coal Res. 5th, 1980, 805-19/CA 97:74826Y

Die Braunkohle wird auf einen Feuchtigkeitsgehalt von ca. 16 Gew.-% vorgetrocknet und brikettiert. Die Briketts werden wieder zerkleinert, carbonisiert und mit Wasserdampf aktiviert.

A. Albiniak et al., Pr.Nauk.Inst.Chem.Technol.Nafty Wegla Politech. Wroclaw 41(1985)213-8 / CA 104: 209 764 n

Die Braunkohle wird getrocknet, verkokt und anschließend mit Wasserdampf, Kohlendioxid und Sauerstoff aktiviert.

DE-OS 36 03 003

Die Braunkohle wird getrocknet, bei 350 - 500 °C pyrolisiert und mit Wasserdampf bei 700 - 800 °C aktiviert.

DDR-PS 207 183

Die Braunkohle wird auf einen Feuchtigkeitsgehalt von 20 % getrocknet, mit organischen Lösungsmitteln extrahiert, an der Luft getrocknet, anschließend mit Sägemehl und Zinkchlorid-Lösung vermischt, granuliert und auf 600 -750 °C erhitzt.

DDR-PS 211 331

Die Braunkohle wird vorgetrocknet, mit Sägemehl und/oder Torf sowie salzsaurer Zinkchlorid-Lösung vermischt, granuliert und auf 650 - 750 °C erhitzt.

DDR-PS 227 946

Die Braunkohle wird getrocknet und zu Formlingen verpreßt, die Formlinge werden zerkleinert, die zerkleinerten Formlinge werden erneut zu Formlingen endverpreßt, die endverpreßten Formlinge werden entgast, zerkleinert und in bekannten Aktivierungsreaktoren aktiviert.

EP-PS 2275 und EP-PS 2674

Die Braunkohle wird einer Säure- und Wasserwäsche unterzogen, getrocknet, gemahlen und brikettiert. Die Briketts werden zerkleinert, geschwelt und aktiviert.

Die bekannten Verfahren haben den Nachteil, daß zur Vorbehandlung der Braunkohle zahlreiche Verfahrensschritte, wie zum Beispiel Wasser- und Säurewäsche, Trocknung, Mahlung, Brikettierung, Verkokung der Braunkohle notwendig sind.

Gegenstand der Erfindung ist ein Verfahren zur Herstellung von Aktivkohle auf Basis von Braunkohle, welches dadurch gekennzeichnet ist, daß man grubenfeuchte Braunkohle gegebenenfalls unter Zusatz von Kaliumionen auf höhere Temperaturen erhitzt.

Unter grubenfeuchter Braunkohle wird eine Braunkohle verstanden, die direkt nach dem Abbau in der Grube erfindungsgemäß mit dem natürlichen Wassergehalt verarbeitet wird.

In einzelnen Fällen kann der Wassergehalt der grubenfeuchten Braunkohle durch Trocknen bei beliebigen Bedingungen auf einen Betrag von 30 Gew.-% gesenkt werden.

Diese Maßnahme beeinträchtigt jedoch die Adsorptionsleistung des Produktes, das aus dieser zum Teil vorgetrockneten Braunkohle hergestellt wird.

Die Temperatur, auf die die grubenfeuchte Braunkohle erhitzt wird, kann größer 600 °C, vorzugsweise größer 800 °C betragen.

Vorteilhafterweise kann bei dem Erhitzen der grubenfeuchten Braunkohle zusätzlich Wasserdampf zugesetzt werden.

Vorteilhafterweise können bei dem Erhitzen der grubenfeuchten Braunkohle zusätzlich Kaliumionen in wäßriger Lösung zugesetzt werden.

Das erfindungsgemäße Verfahren hat den Vorteil, daß man aus grubenfeuchter Braunkohle in einem einzigen Verfahrensschritt Aktivkohle herstellen kann.

Das erfindungsgemäße Verfahren kann in bekannten Aktivierungsvorrichtungen durchgeführt werden.

Beispiele

Für die Versuche wurden fünf verschiedene Braunkohlen A, B, C, D und E eingesetzt, deren Eigenschaften in Tabelle 1 aufgeführt sind.

Die in grubenfeuchtem und grobstückigem Zustand angelieferten Braunkohlen wurden im Backenbrecher gebrochen und auf eine für das verwendete Drehrohr geeignete Fraktion von 1 - 4 mm abgesiebt. Das Erhitzen der Braunkohlen erfolgte im indirekt beheizten Drehrohr unter Variation der Temperatur des Wassergehaltes, der Gasatmosphäre und des Kaliumgehaltes durchgeführt.

Bedingungen:

Drehrohr : indirekt beheizt
Aktivierungstemperatur: 600 - 1000 °C
Wasserdampfmenge : ohne bzw. 1000 g/h bei Vergleichsversuchen
Umdrehungszahl : 7,5 U/min
Stauhöhe : ohne Stauscheibe
Verweilzeit : ca. 15 min
Rohrneigung : ca. 1 %

Die Produkte wurden gründlich mit Wasser gewaschen und nach den üblichen Methoden untersucht.

Rohstoffeinflüsse

Die erzielbare Adsorptionsleistung ist von Provenienz der Braunkohle abhängig. Bei zunehmendem Wassergehalt der grubenfeuchten Braunkohle wird die Adsorptionsleistung verbessert (vgl. Figur 1 und Tabelle 3).

Einfluß der Aktivierungstemperatur

3

Der Einfluß der Temperatur wurde in einem Bereich von 600 - 1000 °C untersucht (vgl. Tab. 4).

Einfluß der Trocknung

Um den Einfluß der Trocknung auf die Adsorptionsleistung zu untersuchen, wurde die Braunkohle D stufenweise getrocknet. Der umgekehrte Weg, die Braunkohle zunächst vollständig zu trocknen und durch Wasserzusatz den Wassergehalt einzustellen, ist nicht möglich. Bei Reduzierung des Wassergehaltes der Braunkohle wird die Adsorptionsleistung verschlechtert (Figur 2 bzw. Tab. 5).

Dampfzusatz

Getrocknete Braunkohle unter Zusatz von Wasserdampf ergibt im Vergleich zu grubenfeuchter Braunkohle ohne Dampfzusatz bei etwa gleicher Ausbeute Aktivkohlen mit wesentlich schlechteren Adsorptionseigenschaften. Bei Verwendung von grubenfeuchter Braunkohle kann durch zusätzliche Dampfzugabe die Adsorptionsleistung positiv beeinflußt werden (Tab. 6).

Versuche unter Kalium-Katalyse

Die grubenfeuchten Braunkohlen wurden mit Kalilauge besprüht, wodurch sich der Wassergehalt der Braunkohlen geringfügig erhöhte. Die Kaliumzugabe (1,0 Gew.-% KOH bez. auf trockene Kohle) führte zu einer deutlichen Steigerung des Feinporenanteils in den Produkten (vgl. Tab. 7).

Unter Verwendung der Braunkohle C wurde der Einfluß der Kalium-Konzentration im Bereich von 0 bis 2,0 Gew.-% KOH (bez. auf trockene Kohle) untersucht. Anhand der Benzolisotherme läßt sich zeigen, daß mit steigendem Kalium-Gehalt der Mesoporenanteil ab- und der Mikroporenanteil zunimmt (vgl. Tab. 8).

Tabelle 1: Braunkohleeigenschaften

| Braun-kohle | Wasser-gehalt G.-% | Asche-gehalt % (wf) | Flücht.-Gehalt % (wf) | Cfix %(wf) | Elementarzusammensetzung C %(waf) | H %(waf) | N %(waf) | O %(waf) | S %(wf) | Atomver-hältnisse H/C | O/C | Mazeralgruppenanalyse Humi-nit % | Lipti-nit % | Iner-tinit % | Poren-volumen ml/g | wahre Dichte g/ml | Poro-sität Vol.-% |
|---|---|---|---|---|---|---|---|---|---|---|---|---|---|---|---|---|---|
| A | 46 | 10.2 | 67.4 | 22.4 | 71.1 | 6.5 | 1.1 | 20.6 | 0.56 | 1.09 | 0.22 | 95 | 4 | 1 | 0.238 | 1.634 | 28.0 |
| B | 49 | 7.1 | 77.8 | 15.1 | 71.1 | 7.2 | 1.2 | 20.2 | 0.25 | 1.21 | 0.21 | 82 | 11 | 7 | 0.277 | 1.535 | 29.8 |
| C | 51 | 5.3 | 56.1 | 38.6 | 73.5 | 7.8 | 1.2 | 16.8 | 0.48 | 1.26 | 0.17 | 92 | 5 | 3 | 0.390 | 1.594 | 38.3 |
| D | 56 | 2.0 | 61.4 | 36.6 | 72.7 | 6.6 | 1.1 | 19.0 | 0.40 | 1.09 | 0.20 | 92 | 5 | 3 | 0.262 | 1.506 | 29.1 |
| E | 59 | 0.9 | 58.3 | 40.8 | 65.3 | 6.6 | 1.2 | 26.4 | 0.45 | 1.21 | 0.30 | 85 | 10 | 5 | 0.714 | 1.520 | 52.0 |

...

EP 0 363 613 A2

Tabelle 3

| Braunkohle | Variation des Rohstoffes | | | | | | | | |
|---|---|---|---|---|---|---|---|---|---|
| Aktivierungstemperatur: 950 °C Kohleeintrag: 300 g/h bez. auf trockene Kohle | | | | | | | | | |
| Braunkohle | Wassergehalt | Ofenausb. | Benzolisotherme AS (Gew.-%) | | | | Jodzahl | Methylenblautiter | Melasse-mg-zahl |
| | G.-% | G.-% | 9/10 | 1/10 | 1/100 | 1/1000 | mg/g | ml/0.1 g | mg |
| A | 46 | 9.1 | 56.6 | 18.4 | 11.4 | 5.9 | 585 | 11.0 | 195 |
| B | 49 | 17.4 | 49.0 | 17.8 | 11.9 | 7.4 | 595 | 11.0 | 215 |
| C | 51 | 9.2 | 45.3 | 18.3 | 12.0 | 7.4 | 660 | 11.5 | 200 |
| D | 56 | 9.4 | 52.1 | 22.8 | 16.0 | 9.4 | 865 | 13.5 | 180 |
| E | 59 | 13.9 | 55.7 | 29.9 | 23.0 | 14.1 | 1050 | 15.5 | 190 |

EP 0 363 613 A2

Tabelle 4

| Variation der Aktivierungstemperatur | | | | | | | | |
|---|---|---|---|---|---|---|---|---|
| Braunkohle D | | | | | | | | |
| Wassergehalt: 56 G.-% Kohleeintrag: 375 g/h bez. auf trockene Kohle | | | | | | | | |
| Ativierungstemperatur | Ofenausb. | Benzolisotherme AS (Gew.-%) | | | | Jodzahl | Methylenblautiter | Melasse-mg-zahl |
| °C | G.-% | 9/10 | 1/10 | 1/100 | 1/1000 | mg/g | ml/0.1 g | mg |
| 600 | 42.1 | 0.9 | 0.3 | 0.2 | - | 55 | 0.5 | > 3000 |
| 700 | 27.2 | 14.3 | 11.0 | 8.8 | 6.8 | 295 | 0.5 | > 3000 |
| 800 | 27.4 | 39.4 | 17.3 | 12.2 | 8.0 | 590 | 6.0 | 360 |
| 850 | 24.5 | 39.7 | 20.0 | 14.7 | 9.9 | 670 | 6.0 | 370 |
| 900 | 21.2 | 43.3 | 20.8 | 15.3 | 10.1 | 725 | 6.0 | 295 |
| 950 | 12.1 | 52.9 | 23.7 | 17.1 | 10.9 | 835 | 9.0 | 215 |
| 1000 | 6.0 | 58.8 | 24.3 | 17.3 | 10.8 | 790 | 10.5 | 170 |

Tabelle 5

| Variation des Wassergehaltes | | | | | | | | |
|---|---|---|---|---|---|---|---|---|
| Braunkohle D | | | | | | | | |
| Aktivierungstemperatur: 950 °C | | | | | | | | |
| Kohleeintrag: 300 g/h bez. auf trockene Kohle | | | | | | | | |
| Wassergehalt | Ofenausb. | Benzolisotherme AS (Gew.-%) | | | | Jodzahl | Methylenblautiter | Melasse-mg-zahl |
| G.-% | G.-% | 9/10 | 1/10 | 1/100 | 1/1000 | mg/g | ml/0.1 g | mg |
| <1 | 38.3 | 14.2 | 6.8 | 5.5 | 4.1 | 275 | 2.0 | 2800 |
| 7 | 33.1 | 23.9 | 10.1 | 8.0 | 6.3 | 375 | 2.5 | 685 |
| 16 | 27.8 | 23.8 | 11.4 | 9.6 | 7.4 | 380 | 3.0 | 915 |
| 20 | 29.5 | 30.4 | 14.5 | 11.2 | 8.7 | 475 | 3.5 | 520 |
| 26 | 25.4 | 35.0 | 16.7 | 12.8 | 9.7 | 535 | 4.5 | 440 |
| 32 | 17.9 | 44.5 | 20.2 | 15.5 | 10.8 | 675 | 7.5 | 350 |
| 46 | 16.5 | 48.8 | 22.8 | 17.0 | 11.5 | 790 | 8.5 | 285 |
| 56 | 9.4 | 52.1 | 22.8 | 16.0 | 9.4 | 865 | 13.5 | 180 |

Tabelle 6

| Einfluß des Dampfzusatzes | | | | | | | | | | |
|---|---|---|---|---|---|---|---|---|---|---|
| Braunkohle D | | | | | | | | | | |
| Aktivierungstemperatur: 950 °C | | | | | | | | | | |
| Wassergehalt der BK | Kohleeintrag | Dampfzusatz | Ofenausb. | Benzolisotherme AS (Gew.-%) | | | | Jodzahl | Methylenblautiter | Melasse-mg-zahl |
| G.-% | g/h(TS) | g/h | G.-% | 9/10 | 1/10 | 1/100 | 1/1000 | mg/g | ml/0.1 g | mg |
| <1 | 300 | - | 38.3 | 14.2 | 6.8 | 5.5 | 4.1 | 275 | 2.0 | 2800 |
| <1 | 300 | 1000 | 8.8 | 35.4 | 15.1 | 10.7 | 6.4 | 570 | 8.0 | 335 |
| 56 | 300 | - | 9.4 | 52.1 | 22.8 | 16.0 | 9.4 | 865 | 13.5 | 180 |
| 56 | 900 | - | 26.9 | 29.5 | 17.8 | 14.3 | 10.2 | 610 | 4.0 | 965 |
| 56 | 900 | 1000 | 19.6 | 47.1 | 21.9 | 15.6 | 9.9 | 790 | 9.5 | 320 |

EP 0 363 613 A2

Tabelle 7

| Braunkohle | Kaliumgehalt | Wassergehalt | Ofenausb. | Benzolisotherme AS- (Gew.-%) | | | | Jodzahl | Methylenblautiter | Melasse-mg-zahl |
|---|---|---|---|---|---|---|---|---|---|---|
| | G.-% | G.-% | G.-% | 9/10 | 1/10 | 1/100 | 1/1000 | mg/g | ml/0.1 g | mg |
| A | - | 46.0 | 16.2 | 43.3 | 18.4 | 11.0 | 6.6 | 595 | 9.0 | 190 |
| A | 1.0 | 49.1 | 13.0 | 58.2 | 24.1 | 14.5 | 7.3 | 690 | 12.5 | 155 |
| B | - | 49.0 | 22.4 | 37.2 | 18.6 | 12.7 | 8.6 | 610 | 8.0 | 280 |
| B | 1.0 | 51.9 | 19.2 | 51.0 | 24.9 | 17.5 | 11.3 | 830 | 13.0 | 230 |
| C | - | 51.0 | 15.4 | 56.5 | 20.0 | 13.3 | 8.9 | 665 | 10.5 | 190 |
| C | 1.0 | 53.4 | 14.1 | 60.4 | 30.6 | 20.8 | 11.6 | 995 | 12.5 | 155 |
| E | - | 59.0 | 21.7 | 44.3 | 28.9 | 23.4 | 15.3 | 1035 | 13.0 | 415 |
| E | 1.0 | 57.0 | 22.5 | 47.3 | 39.2 | 31.5 | 19.2 | 1260 | 18.5 | > 3000 |

**Variation des Rohstoffes unter Kalium-Katalyse**

Aktivierungstemperatur: 950 °C

Kohleeintrag: 600 g/h bez. auf trockene Kohle

Tabelle 8

| Variation des Kalium-Gehaltes | | | | | | | | | |
|---|---|---|---|---|---|---|---|---|---|
| Braunkohle C | | | | | | | | | |
| Aktivierungstemperatur: 950 °C | | | | | | | | | |
| Kohleeintrag: 600 g/h bez. auf trockene Kohle | | | | | | | | | |
| KOH-gehalt | Wassergehalt | Ofenausb. | Benzolisotherme AS (Gew.-%) | | | | Jodzahl | Methylenblautiter | Melasse-mg-zahl |
| G.-% | G.-% | G.-% | 9/10 | 1/10 | 1/100 | 1/1000 | mg/g | ml/0.1 g | mg |
| - | 51.0 | 15.4 | 56.5 | 20.0 | 13.3 | 8.9 | 665 | 10.5 | 190 |
| 0.5 | 53.6 | 11.9 | 55.8 | 24.1 | 16.9 | 10.8 | 780 | 13.0 | 200 |
| 1.0 | 53.6 | 14.1 | 60.4 | 30.6 | 20.8 | 11.6 | 995 | 12.5 | 155 |
| 1.5 | 53.6 | 13.8 | 62.6 | 36.3 | 21.5 | 9.4 | 1200 | 18.0 | 150 |
| 2.0 | 53.6 | 14.1 | 60.9 | 38.1 | 22.3 | 10.4 | 1095 | 17.5 | 325 |

EP 0 363 613 A2

**Ansprüche**

1. Verfahren zur Herstellung von Aktivkohle auf Basis von Braunkohle, dadurch gekennzeichnet, daß man grubenfeuchte Braunkohle gegebenenfalls unter Zusatz von Kaliumionen auf höhere Temperaturen erhitzt.

**Fig. 1** ABHÄNGIGKEIT DER JODZAHL VOM WASSERGEHALT DER ROHBRAUNKOHLEN

KOHLEEINTRAG: 300 g/h (TROCKENSUBSTANZ)
AKT.- TEMP. : 950 °C

**Fig. 2** ABHÄNGIGKEIT DER JODZAHL VOM WASSERGEHALT DER BRAUNKOHLE

KOHLEEINTRAG: 300 g/h (TROCKENSUSTANZ)
AKT.-TEMP. : 950 °C